# DEMANDE DE BREVET EUROPEEN

(11) **EP 2 154 870 A1**
(43) Date de publication de la demande: **17.02.2010**
(21) Numéro de dépôt: 09008336.1
(22) Date de dépôt: 25.06.2009
(51) Int. Cl.: H04L 29/12, H04M 11/00, H04L 12/28

(54) **Procédé et dispositif de télécommande de fonctions**

(30) Priorité: 25.06.2008 FR 0803588
(71) Demandeur: Axible Technologies, 31672 Labège (FR)
(72) Inventeur: Lemoan, Ludovic, 31672 Labège (FR)

(57) **Abrégé**

Le procédé de télécommande comporte :
- une étape d'association d'une fonction à au moins un couple de numèros de téléphone comportant un numéro de téléphone appelé et un numéro de téléphone appelant,
- lors de l'appel d'un dit numéro de téléphone appelé :
o une étape de détermination du numéro de téléphone appelant et
o une étape de commande de la fonction associée au couple constitué du numéro de téléphone appelé et du numéro de téléphone appelant.

Dans des modes de réalisation, au cours de l'étape d'association, on met en oeuvre un serveur central capable de recevoir les identifiants d'appelant pour au moins un dit numéro appelé, et, au cours de l'étape de commande, ledit serveur central transfert la commande de la fonction à un boîtier électronique de commande électrique de ladite fonction.

## Description

La présente invention vise un procédé et un dispositif de télécommande de fonctions. Elle s'applique, en particulier, à la télécommande de systèmes domestiques ou domotiques, par exemple portails électriques, volets, chauffages, climatisations, alarmes.

On connaît des dispositifs de télécommande basés sur l'ajout d'une fonction de téléphonie, fixe ou cellulaire, dans un système domestique, cette fonction étant associée à un numéro de téléphone unique. En appelant ce numéro de téléphone, l'utilisateur déclenche une fonction prévue à l'avance, par exemple ouverture d'un portail électrique, allumage du chauffage ou de la climatisation, extinction de l'alarme.

Cependant, ces dispositifs manquent de souplesse. En particulier, ils mobilisent un numéro de téléphone pour chaque fonction ou système à commander.

La présente invention vise à remédier à ces inconvénients.

A cet effet, selon un premier aspect, la présente invention vise un procédé de télécommande, caractérisé en ce qu'il comporte :
- une étape d'association d'une fonction à au moins un couple de numéros de téléphone comportant un numéro de téléphone appelé et un numéro de téléphone appelant,
- lors de l'appel d'un dit numéro de téléphone appelé :
   o une étape de détermination du numéro de téléphone appelant et
   o une étape de commande de la fonction associée au couple constitué du numéro de téléphone appelé et du numéro de téléphone appelant.

Grâce à ces dispositions, le même numéro de téléphone appelé peut être affecté à plusieurs fonctions ou systèmes, selon le numéro de téléphone appelant. Ainsi, très peu de numéros de téléphone sont réservés à ces télécommandes et ces numéros de téléphones destinés à être appelés sont partagés entre les utilisateurs. En d'autres termes, même si, dans un pays, chaque foyer disposait de dix fonctions ou systèmes télécommandés, une centaine de numéro de téléphone suffirait.

Selon des caractéristiques particulières, au cours de l'étape d'association, on met en oeuvre un serveur central capable de recevoir les identifiants d'appelant pour au moins un dit numéro appelé, et, au cours de l'étape de commande, ledit serveur central transfert la commande de la fonction à un boîtier électronique de commande électrique de ladite fonction.

Selon des caractéristiques particulières, au cours de l'étape de commande, le serveur communique avec le circuit électronique par l'intermédiaire du réseau Internet.

Grâce à ces dispositions, le circuit électronique n'a pas besoin d'être programmable par l'utilisateur, par exemple pour mémoriser des numéros de téléphone autorisés à commander les fonctions ou systèmes domestiques. Ceci simplifie ces circuits électroniques et réduit, en conséquence, leur coût de fabrication.

Selon des caractéristiques particulières, au cours de l'étape d'association, on met en oeuvre un accès à un serveur central par l'intermédiaire d'Internet.

Selon des caractéristiques particulières, au cours de l'étape d'association, on associe un couple de numéros de téléphone à une fonction et à une durée d'autorisation de commande de ladite fonction.

Grâce à ces dispositions, on peut limiter l'autorisation d'accès donnée à un tiers à une durée prédéterminée.

Selon des caractéristiques particulières, au cours de l'étape d'association, on associe un couple de numéros de téléphone à une fonction et à un nombre de commandes de ladite fonction autorisées.

Grâce à ces dispositions, on peut limiter l'autorisation d'accès donnée à un tiers à un nombre de commande prédéterminée.

Selon des caractéristiques particulières, au cours de l'étape d'association, on met en oeuvre une interface graphique affichée sur un écran et une fonction de glissement d'une fonction en regard d'un numéro de téléphone appelé et d'un numéro de téléphone appelant.

Selon des caractéristiques particulières, au cours de l'étape d'association, si un couple de numéros est déjà associé à une autre fonction que celle que l'on veut associer, on met en oeuvre un numéro de téléphone complémentaire non directement accessible par l'utilisateur.

Grâce à ces dispositions, on résout les conflits. En effet, plusieurs personnes peuvent vouloir associer différentes fonctions au même couple de numéros de téléphone.

Selon des caractéristiques particulières, au cours de l'étape de commande, on met en oeuvre des fréquences associées à des touches pour fournir la valeur d'un paramètre de la fonction commandée.

Par exemple, on contrôle ainsi directement la température d'un thermostat ou on utilise un code personnel d'identification pour augmenter la sécurité de la commande, notamment lorsqu'il s'agit de la commande d'arrêt de fonctionnement d'une alarme.

Selon des caractéristiques particulières, au cours d'un appel d'un dit numéro de téléphone appelé, on met en oeuvre un téléphone mobile doté d'un programme, les numéros de téléphone appelés étant conservés en mémoire non volatile.

Selon des caractéristiques particulières, ladite mémoire non volatile est la mémoire de la carte à puce du téléphone mobile.

Selon des caractéristiques particulières, le procédé objet de la présente invention comporte, pour au moins une fonction, une étape de détermination de présence physique d'une personne, ladite fonction n'étant commandée qu'en cas de présence physique d'un utilisateur.

Par exemple, un portail ou une porte ne s'ouvre qu'au moment auquel l'utilisateur appelant arrive à proximité. Pour la réalisation de ces caractéristiques, on met en oeuvre, par exemple, un capteur de présence.

Selon des caractéristiques particulières, au cours de l'étape de détermination de présence d'un utilisateur, on effectue une identification de l'utilisateur. Par exemple, on met en oeuvre un code d'identification personnel, saisi par l'utilisateur appelant, ou une reconnaissance biométrique (empreinte, morphologie, visage, iris de l'oeil, empreinte vocale, ...).

Selon un deuxième aspect, la présente invention vise un dispositif de télécommande, caractérisé en ce qu'il comporte :
- un moyen d'association d'une fonction à au moins un couple de numéros de téléphone comportant un numéro de téléphone appelé et un numéro de téléphone appelant et
- un moyen de contrôle adapté, lors de l'appel d'un dit numéro de téléphone appelé :
   o à déterminer le numéro de téléphone appelant et
   o à commander la fonction associée au couple constitué du numéro de téléphone appelé et du numéro de téléphone appelant.

Les avantages, buts et caractéristiques particulières de ce dispositif étant similaires à ceux du procédé objet de la présente invention, tel que succinctement exposé ci-dessus, ils ne sont pas rappelés ici.

D'autres avantages, buts et caractéristiques de la présente invention ressortiront de la description qui va suivre faite, dans un but explicatif et nullement limitatif en regard des dessins annexés, dans lesquels :
- la figure 1 représente, schématiquement, un mode de réalisation particulier du dispositif objet de la présente invention,
- la figure 2 représente, schématiquement, une interface utilisateur mise en oeuvre par un utilisateur pour autoriser la commande d'une fonction et
- les figures 3A et 3B représentent, sous forme de logigrammes, des étapes mises en oeuvre dans un mode de réalisation particulier du procédé objet de la présente invention.

Dans toute la description, on appelle utilisateur « visiteur », l'utilisateur qui commande une fonction à distance et utilisateur « hôte », l'utilisateur qui autorise cette commande de fonction. Bien entendu, la même personne peut être successivement utilisateur hôte et utilisateur visiteur.

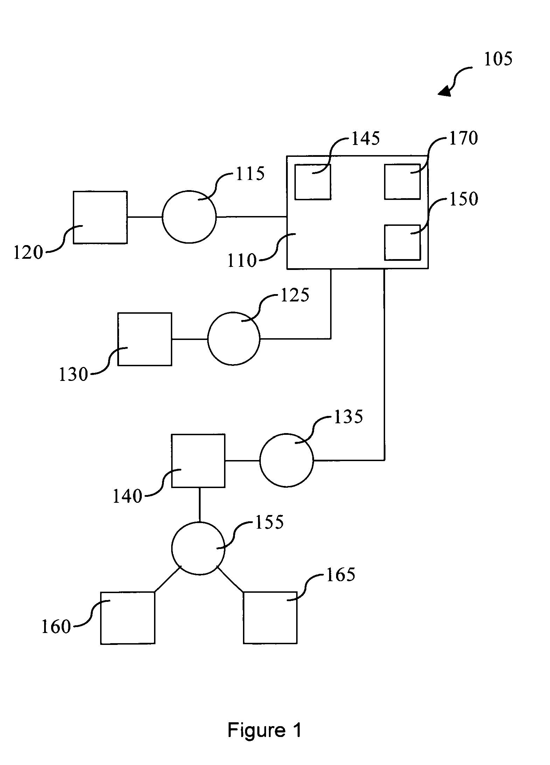

On observe, en figure 1, un dispositif 105 comportant un serveur 110 relié, par l'intermédiaire d'un premier réseau 115, à un premier terminal utilisateur 120, par l'intermédiaire d'un deuxième réseau 125 à un deuxième terminal utilisateur 130 et, par l'intermédiaire d'un troisième réseau 135, à un troisième terminal utilisateur 140. Le serveur 110 conserve une base de données 145, un site de la toile (« web en anglais) 170 et des programmes informatiques 150 permettant son fonctionnement conformément à la présente invention. Le troisième terminal utilisateur 140 est relié, par l'intermédiaire d'un réseau local 155, à une carte électronique de commande 160 relié à des systèmes ou fonctions 165.

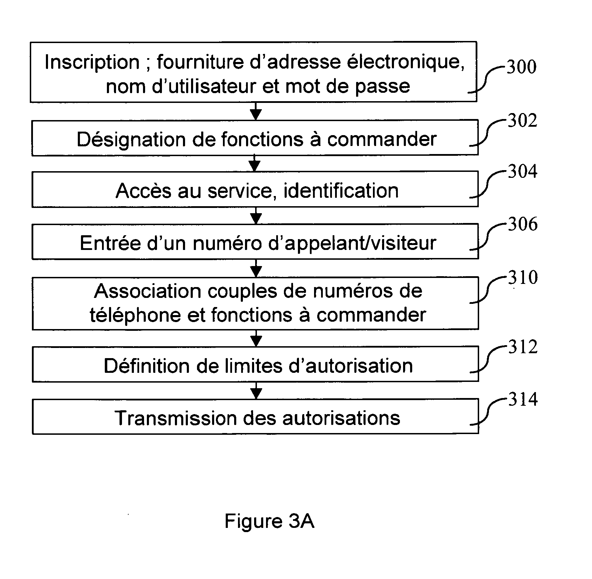

Le serveur 110 est de type connu. Le premier réseau 115 est, préférentiellement, le réseau Internet. Le premier terminal utilisateur 120 est de type connu. Par exemple il est constitué d'un ordinateur personnel, d'un assistant numérique personnel communicant ou d'un téléphone doté de fonctions de navigation sur Internet. Le terminal utilisateur 120 permet à un utilisateur hôte de naviguer sur le site 170 hébergé par le serveur 110 afin, notamment, d'associer des fonctions à des couples de numéros de téléphone, comme exposé en regard de la figure 3A.

Le deuxième réseau 125 est, préférentiellement, un réseau téléphonique, éventuellement VolP (acronyme de « Voice On Internet Protocol » pour téléphonie sur Internet). Le deuxième terminal utilisateur 130 est un téléphone, préférentiellement mobile, qui permet à un utilisateur visiteur de commander la fonction autorisée par l'utilisateur hôte.

La base de données 145 du serveur 110 conserve, associé entre eux, des couples de numéros de téléphone, d'une part, et des fonctions à commander, d'autre part, les associations représentant des autorisations de commandes données par l'utilisateur hôte. Comme exposé en regard de la figure 3A, ces associations peuvent aussi comporter des durées d'autorisation et/ou des nombres de commandes autorisées à l'utilisateur visiteur ainsi que des données d'identification de chaque utilisateur visiteur autorisé.

Le troisième terminal utilisateur 140 est, préférentiellement, un terminal fixe, par exemple un ordinateur ou un téléphone fixe doté de fonctions spécifiques pour mettre en oeuvre la présente invention.

Le troisième réseau 135 est, préférentiellement, le réseau Internet. II permet au serveur 110 de transmettre au troisième terminal utilisateur 140 une commande de fonction.

Le réseau local 155 est, par exemple, de type WLAN (acronyme de « Wireless Local Area Network » pour réseau local sans fil). II permet la communication à courte distance entre le troisième terminal utilisateur 140, la carte électronique de commande 160 et les systèmes ou fonctions 165. Le réseau local 155 est, par exemple, conforme à la norme WiFi (acronyme de « Wireless Fidelity » pour fidélité sans fil) ou Ethernet (marque déposée). En variante, la communication entre la carte électronique de commande 160 et les systèmes ou fonctions 165 se fait par des signaux radio-fréquence de format dédié à la mise en oeuvre de la présente invention. Préférentiellement, les communications locales se font avec identification de l'émetteur et du récepteur, pour éviter les interactions avec des moyens identiques positionnés à proximité et susceptibles de recevoir les signaux émis sur d'autres réseaux locaux sans fil.

Les systèmes ou fonctions 165 sont de type connu. Ils peuvent être munis d'actionneurs (par exemple de portail ou de volet) ou d'entrées de signaux (par exemple pour alarme, chauffage ou climatisation).

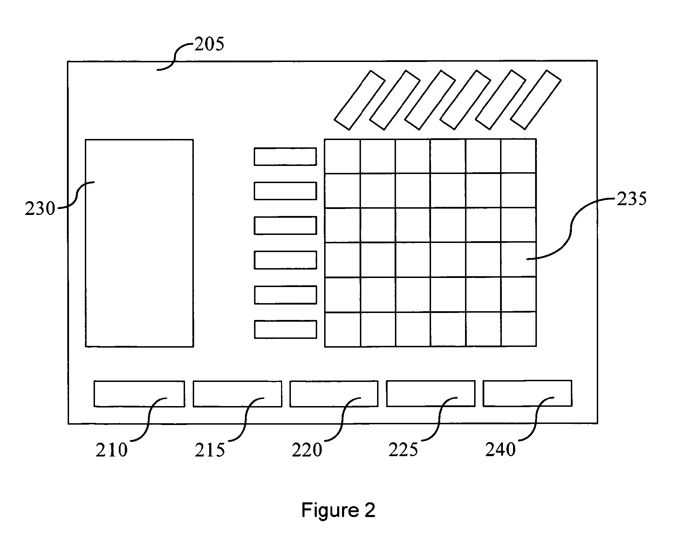

On observe, en figure 2, une interface utilisateur 205 constituée par une page du site de la toile 170, préférentiellement protégée par un mode de communication chiffré, par exemple sous « https » (acronyme de « Hypertext transfer protocol secure » pour protocol de transfert hypertexte sécurisé). Cette interface 205 comporte une zone 210 d'entrée de numéro de téléphone appelant, une zone 215 de désignation de systèmes ou fonctions susceptibles d'être commandés conformément à la présente invention, une zone 220 de définition de durée d'autorisation, une zone 225 de définition de nombre de commandes autorisées, une zone 240 de définition de valeur de paramètre, une zone 230 de représentation des systèmes ou fonctions susceptibles d'être commandées et une zone 235 d'un tableau d'association des couples de numéros de téléphone et de fonctions.

Pour pouvoir accéder à cette interface utilisateur, l'utilisateur hôte doit, d'abord, être inscrit auprès du service de commande à distance. II doit, ensuite, avoir fourni son identifiant (en anglais « login ») et son mot de passe (en anglais « password »), selon des procédures connues.

Lorsqu'il a atteint l'interface utilisateur 205, l'utilisateur hôte peut entrer un numéro de téléphone d'un utilisateur visiteur, dans la zone 210. Préférentiellement, il fournit aussi, à cette occasion, un nom ou prénom et une adresse électronique (« email address » en anglais) de ce visiteur. Par exemple, il saisit « 06 12 13 14 15 », « Pierre », « Martin » et « pierre.martin@internet.com » dans quatre champs de saisie de la zone 210. Lorsqu'il valide une entrée dans la zone 210, le nom et/ou prénom ou, à défaut, le numéro de téléphone du visiteur s'ajoutent automatiquement dans la prochaine ligne vierge du tableau de la zone 235.

Avec l'interface utilisateur 205, l'utilisateur hôte peut aussi désigner chaque système ou fonction à commander, dans la zone 215. Préférentiellement, il fournit alors un nom « en clair » et une identification de sortie du circuit électronique 160. Par exemple, il saisit « portail de garage » et « 3 », dans deux champs de saisie de la zone 215. Lorsqu'il valide une entrée dans la zone 215, le nom en clair ou, à défaut, l'identification de sortie s'ajoutent automatiquement dans la zone 230 de représentation des fonctions disponibles.

Pour autoriser un visiteur à commander un système ou fonction, l'utilisateur hôte fait un cliquer-glisser (en anglais « drag and drop ») d'une représentation de la fonction à commander depuis la zone 230 jusqu'à une case du tableau de la zone 235 qui correspond, en colonne, au numéro de téléphone à appeler pour commander la fonction et, en ligne, au visiteur concerné.

Dès qu'une représentation a été insérée dans le tableau, les zones 220 de définition de durée d'autorisation, 225 de définition de nombre de commandes autorisées et 240 de définition de valeurs de paramètres deviennent actives et l'hôte est invité à indiquer les limites de l'autorisation en cours de délivrance, soit en terme de durée (y compris en termes de date et heure limites), soit en termes de nombre de commandes.

En ce qui concerne la valeur de paramètre, l'utilisateur hôte peut, dans la zone 240, indiquer une valeur attendue :
- par exemple un mot de passe qui sera fourni par le visiteur par l'intermédiaire du clavier de son téléphone
- une plage de valeurs possibles.

Préférentiellement, au moins dans le premier cas, l'émission et la reconnaissance des symboles se fait en DTMF, acronyme de « Dual Tone Modulation Frequency » pour fréquence de modulation à deux tons.

Dans le deuxième cas, outre l'utilisation du clavier, on peut mettre en oeuvre une durée avant d'arrêter une tentative de connexion téléphonique, comme exposé plus loin, notamment lorsque c'est un programme résidant sur le téléphone du visiteur qui contrôle cette durée.

Dans un but de clarté, les fonctions classiques d'édition et de suppression d'entrée, qui concernent toutes les opérations effectuées par l'hôte, ne sont ni exposées ni représentées ici.

Dès que l'utilisateur valide une association, le serveur 110 vérifie que le couple de numéros de téléphone constitué du numéro de téléphone appelant et du numéro de téléphone appelé n'a pas déjà été affecté à une autre fonction. En variante, dès qu'un numéro de téléphone de visiteur est entré, on rend inactives les cases du tableau correspondant à des couples comportant, comme numéro d'appelant, ce numéro de téléphone de visiteur, déjà associés à une fonction (ces cases apparaissent, alors, en grisé). Si toutes les cases d'un numéro de visiteur sont déjà associées à une fonction, le serveur ajoute automatiquement une case vierge dont il conserve, en mémoire, le numéro de téléphone appelé correspondant.

Lorsque le visiteur achève une session sur l'interface 205, le serveur 110 envoie à destination, d'une part, de l'adresse électronique du visiteur et, d'autre part, de l'adresse électronique de l'hôte, un courrier électronique rappelant les numéros de téléphone à composer par ce visiteur, les fonctions qu'ils permettent de commander et, éventuellement, les limites de l'autorisation.

Eventuellement, automatiquement ou sur requête de l'utilisateur hôte, ces données sont fournies au téléphone du visiteur, par exemple par mini-message, ou SMS (acronyme de « Short Message System » pour système à messages courts). Cette option est efficace lorsque :
- le téléphone du visiteur possède un programme organisant automatiquement les autorisations reçues, préférentiellement de manière sécurisée dans la carte à mémoire SIM (acronyme de « subscriber identification module » pour module d'identification d'abonné) et/ou
- l'utilisation de la commande de la fonction est imminente et il existe un risque que le visiteur n'ait pas le temps de consulter ses courriers électroniques.

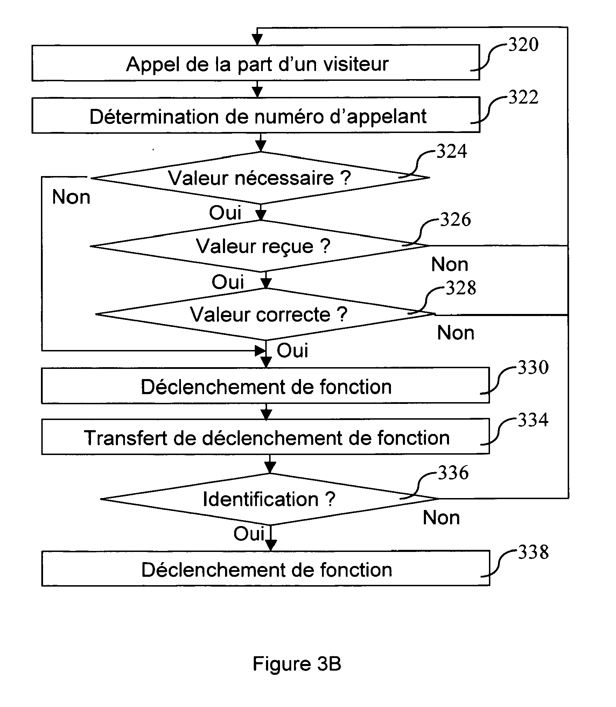

Comme exposé en regard de la figure 3, lorsque le visiteur appelle le numéro d'appelé de ce couple avec la ligne possédant le numéro d'appelant du même couple, la fonction correspondante est déclenchée, à distance, sans que la ligne ne soit prise (et donc sans facturation) pour les fonctions binaires (marche/arrêt ou ouvert/fermé, par exemple) ou après prise de la ligne pour les fonctions nécessitant l'entrée d'une valeur de paramètre (par exemple température de thermostat ou code secret d'arrêt d'alarme).

Pour des raisons de facilité d'utilisation et de besoin de mobilité, préférentiellement, au cours d'un appel d'un dit numéro de téléphone appelé, l'utilisateur visiteur met en oeuvre un téléphone mobile doté d'un programme, les numéros de téléphone appelés étant conservés en mémoire non volatile, préférentiellement dans la mémoire de la carte à puce du téléphone mobile.

Au cours de l'étape de commande, pour les fonctions nécessitant une entrée de valeur de paramètre, le visiteur met en oeuvre des fréquences associées à des touches pour fournir la valeur du paramètre de la fonction commandée. Par exemple, il contrôle ainsi directement la température d'un thermostat ou l'hôte impose la vérification d'un code personnel d'identification pour augmenter la sécurité de la commande, notamment lorsqu'il s'agit de la commande d'arrêt de fonctionnement d'une alarme.

En variante, la durée avant l'arrêt de la tentative de connexion est utilisée pour transmettre une valeur de paramètre, soit depuis le visiteur vers le serveur, soit depuis le serveur vers le visiteur. Par exemple, pour régler la température d'un thermostat, la durée de la tentative de connexion peut correspondre, en secondes, à cette température en degrés Celsius divisée par deux (par exemple 10 secondes correspondent alors à 20 °C).

On comprend que, grâce à la mise en oeuvre de la présente invention, on évite d'avoir à associer une ligne téléphonique à chaque actionneur ou, du moins, à chaque site (par exemple domicile ou bureau).

On observe, en figure 3, que, dans un mode de réalisation particulier, le procédé objet de la présente invention commence par une étape 300, au cours de laquelle l'utilisateur hôte effectue son inscription auprès du service de commande à distance. Au cours de cette étape 302, il fournit son adresse électronique, un nom d'utilisateur et un mot de passe.

Au cours d'une étape 302, l'hôte désigne chaque système ou fonction à commander. Préférentiellement, il fournit alors un nom « en clair » et une identification de sortie du circuit électronique 160.

Puis, au cours d'une étape 304, en mettant en oeuvre le premier terminal utilisateur, l'hôte accède au service sur un site de la toile dédié, fournit son nom d'utilisateur et son mot de passe.

Au cours d'une étape 306, l'utilisateur hôte entre un numéro de téléphone d'un utilisateur visiteur. Préférentiellement, il fournit aussi, à cette occasion, un nom ou prénom et une adresse électronique (« email address » en anglais) de ce visiteur.

Dès qu'un numéro de téléphone de visiteur est entré, le serveur rend inactives les couples comportant, comme numéro d'appelant, ce numéro de téléphone de visiteur, déjà associés à une fonction. Si tous les couples initialement proposés sont déjà associées à une fonction, le serveur ajoute automatiquement au moins un numéro de téléphone appelé qui, avec le numéro de téléphone du visiteur forme un couple non encore associé à une fonction à commander. Ainsi, au cours de l'étape d'association, si un couple de numéros est déjà associé à une autre fonction que celle que l'on veut associer, on met en oeuvre un numéro de téléphone complémentaire non directement accessible par l'utilisateur. On résout ainsi les conflits venant de ce que plusieurs personnes peuvent vouloir associer différentes fonctions au même couple de numéros de téléphone.

Au cours d'une étape 310, pour autoriser un visiteur à commander un système ou fonction, l'utilisateur hôte fait un cliquer-glisser (en anglais « drag and drop ») d'une représentation de la fonction à commander en regard d'un couple de numéros de téléphone comportant le numéro de téléphone à appeler pour commander la fonction et le numéro de téléphone du visiteur concerné.

Lorsqu'une fonction a été associée à un couple de numéros, au cours d'une étape 312, l'utilisateur définit une durée d'autorisation, un nombre de commandes autorisées et/ou une valeur ou une plage de valeurs d'un paramètre de la fonction à commander.

Au cours d'une étape 314, lorsque le visiteur achève une session sur le site dédié, le serveur envoie à destination, d'une part, de l'adresse électronique du visiteur et, d'autre part, de l'adresse électronique de l'hôte, un courrier électronique ou un minimessage rappelant les numéros de téléphone à composer par ce visiteur, les fonctions qu'ils permettent de commander et, éventuellement, les limites de l'autorisation. Dans le cas où le visiteur met en oeuvre un téléphone mobile doté d'un programme, les numéros de téléphone susceptibles d'être appelés sont conservés en mémoire non volatile, préférentiellement la mémoire de la carte à puce du téléphone mobile.

Au cours d'une étape 320 (figure 3B), le visiteur appelle le numéro d'appelé de ce couple avec le deuxième terminal utilisateur, c'est-à-dire la ligne possédant le numéro d'appelant du même couple.

Au cours d'une étape 322, le serveur détermine la fonction associée à ce couple de numéros de téléphone.

Au cours d'une étape 324, optionnelle, le serveur détermine si une valeur de paramètre est nécessaire au déclenchement de la fonction. Si non, il passe à l'étape 330. Si oui, au cours d'une étape 326, le serveur détermine si une valeur a été reçue de la part du téléphone du visiteur. Si non, il attend pendant une durée prédéterminée (par exemple une minute) avant de retourner à l'étape 320 en cas d'absence de réception d'une valeur. Si oui, au cours d'une étape 328, le serveur détermine si la valeur reçue est correcte, c'est-à-dire identique à la valeur attendue ou dans la plage de valeurs attendues. Si non, le serveur retourne à l'étape 320. Si oui, au cours d'une étape 330, le serveur déclenche la fonction associée au couple identifié.

On note que, au cours des étapes 322 à 328, le déclenchement peut être effectué sans que la ligne ne soit prise (et donc sans facturation) pour les fonctions binaires (marche/arrêt ou ouvert/fermé, par exemple) ou après prise de la ligne pour les fonctions nécessitant l'entrée d'une valeur de paramètre, en mettant en oeuvre des fréquences associées à des touches ou en mettant en oeuvre la durée avant l'arrêt de la tentative de connexion pour fournir la valeur de paramètre de la fonction commandée.

Au cours de l'étape 330, le serveur envoie au troisième terminal une requête de déclenchement de la fonction associée au couple déterminé au cours de l'étape 320 et, éventuellement une valeur de paramètre de la fonction commandée.

Au cours d'une étape 334, le troisième terminal transmet la requête de déclenchement, et l'éventuelle valeur de paramètre, au circuit électronique de commande.

Au cours d'une étape 336, optionnelle et dépendant de la fonction à commander, le circuit électronique de commande effectue une détermination de la présence physique du visiteur, ladite fonction à commander n'étant commandée qu'en cas de présence physique du visiteur. Par exemple, un portail ou une porte ne s'ouvre qu'au moment auquel l'utilisateur appelant arrive à proximité. Pour la réalisation de ces caractéristiques, on met en oeuvre, par exemple, un capteur de présence ou, si le visiteur doit être identifié, un code d'identification personnel, saisi sur un clavier local par l'utilisateur appelant, ou une reconnaissance biométrique (empreinte, morphologie, visage, iris de l'oeil, empreinte vocale, ...). Si l'identification ou la détection de présence échouent, on retourne à l'étape 320.

Sinon, au cours d'une étape 338, le circuit électronique de commande déclenche la fonction commandée.

## Revendications

1. Procédé de télécommande, **caractérisé en ce qu'**il comporte :
- une étape d'association d'une fonction à au moins un couple de numéros de téléphone comportant un numéro de téléphone appelé et un numéro de téléphone appelant,
- lors de l'appel d'un dit numéro de téléphone appelé :
o une étape de détermination du numéro de téléphone appelant et
o une étape de commande de la fonction associée au couple constitué du numéro de téléphone appelé et du numéro de téléphone appelant.

2. Procédé selon la revendication 1, **caractérisé en ce que**, au cours de l'étape d'association, on met en oeuvre un serveur central capable de recevoir les identifiants d'appelant pour au moins un dit numéro appelé, et, au cours de l'étape de commande, ledit serveur central transfert la commande de la fonction à un boîtier électronique de commande électrique de ladite fonction.

3. Procédé selon la revendication 2, **caractérisé en ce que**, au cours de l'étape de commande, le serveur communique avec le circuit électronique par l'intermédiaire du réseau Internet.

4. Procédé selon l'une quelconque des revendications 1 à 3, **caractérisé en ce que**, au cours de l'étape d'association, on met en oeuvre un accès à un serveur central par l'intermédiaire d'Internet.

5. Procédé selon l'une quelconque des revendications 1 à 4, **caractérisé en ce que**, au cours de l'étape d'association, on associe un couple de numéros de téléphone à une fonction et à une durée d'autorisation de commande de ladite fonction.

6. Procédé selon l'une quelconque des revendications 1 à 5, **caractérisé en ce que**, au cours de l'étape d'association, on associe un couple de numéros de téléphone à une fonction et à un nombre de commandes de ladite fonction autorisées.

7. Procédé selon l'une quelconque des revendications 1 à 6, **caractérisé en ce que**, au cours de l'étape d'association, si un couple de numéros est déjà associé à une autre fonction que celle que l'on veut associer, on met en oeuvre un numéro de téléphone complémentaire non directement accessible par l'utilisateur.

8. Procédé selon l'une quelconque des revendications 1 à 7, **caractérisé en ce que**, au cours de l'étape de commande, on met en oeuvre des fréquences associées à des touches pour fournir la valeur d'un paramètre de la fonction commandée.

9. Procédé selon l'une quelconque des revendications 1 à 8, **caractérisé en ce qu'**il comporte, pour au moins une fonction, une étape de détermination de présence physique d'une personne, ladite fonction n'étant commandée qu'en cas de présence physique d'un utilisateur.

10. Dispositif de télécommande, **caractérisé en ce qu'**il comporte :
- un moyen d'association d'une fonction à au moins un couple de numéros de téléphone comportant un numéro de téléphone appelé et un numéro de téléphone appelant et
- un moyen de contrôle adapté, lors de l'appel d'un dit numéro de téléphone appelé :
o à déterminer le numéro de téléphone appelant et
o à commander la fonction associée au couple constitué du numéro de téléphone appelé et du numéro de téléphone appelant.
